(19) Europäisches Patentamt
European Patent Office
Office européen des brevets

(11) EP 0 733 226 B1

(12) FASCICULE DE BREVET EUROPEEN

(45) Date de publication et mention
de la délivrance du brevet:
**09.09.1998 Bulletin 1998/37**

(51) Int Cl.6: **G02B 23/14**, G01S 5/16

(21) Numéro de dépôt: **95903387.9**

(22) Date de dépôt: **09.12.1994**

(86) Numéro de dépôt international:
**PCT/FR94/01441**

(87) Numéro de publication internationale:
**WO 95/16219 (15.06.1995 Gazette 1995/25)**

(54) **SYSTEME DE REPERAGE D'ORIENTATION D'UN INSTRUMENT D'OBSERVATION**

ORIENTIERUNGSKORREKTURSYSTEM FÜR BEOBACHTUNGSGERÄT

OBSERVATION INSTRUMENT ORIENTATION DETECTING SYSTEM

(84) Etats contractants désignés:
**DE FR GB IT NL**

(30) Priorité: **10.12.1993 FR 9314872**

(43) Date de publication de la demande:
**25.09.1996 Bulletin 1996/39**

(73) Titulaire: **CENTRE NATIONAL D'ETUDES SPATIALES**
**75001 Paris (FR)**

(72) Inventeurs:
• **DUCHON, Paul**
**F-31810 Venerque (FR)**

• **OTRIO, Georges**
**F-31650 Auzielle (FR)**

(74) Mandataire: **Ilgart, Jean-Christophe**
**c/o Société Brevatome,**
**25, rue de Ponthieu**
**F-75008 Paris (FR)**

(56) Documents cités:
**US-A- 4 123 164**    **US-A- 4 154 532**
**US-A- 4 187 422**

**Description**

L'invention concerne un système de repérage d'orientation d'un instrument d'observation et peut notamment être intégrée à un satellite artificiel, un véhicule spatial ou une station spatiale.

Les instruments d'observation peuvent être amenés en particulier à prendre des images qui doivent être localisées avec une très grande précision. Or la position et l'orientation de l'instrument sur l'élément qui lui sert de support ne sont souvent pas connues avec une exactitude suffisante. D'autre part, il est souvent nécessaire ou avantageux de prévoir des systèmes de changement de visée, c'est-à-dire des appareils qui modifient l'orientation de l'axe de visée de l'instrument d'observation. Ces appareils sont requis quand il est désavantageux ou impossible de tourner l'engin porteur de l'instrument tout entier ou quand on ne peut pas attendre que l'instrument reprenne naturellement l'orientation voulue, ce qui se produit périodiquement sur les satellites non stabilisés. Les appareils de changement de visée agissent sur l'instrument d'observation soit en le déplaçant lui-même, soit - et cette solution est fréquente sur les satellites - en déplaçant sa direction de visée. L'appareil consiste alors en un miroir tournant.

Tout appareil de changement de visée est responsable d'une incertitude supplémentaire de l'orientation de l'axe de visée, à cause de l'incertitude sur sa position de montage ou sur la précision de sa commande, qui se traduit par exemple par une incertitude d'orientation des miroirs de changement de visée. Enfin, des dilatations d'origine thermique peuvent déformer les structures de support de l'instrument, surtout sur des satellites, qui sont exposés à des différences de température très grandes entre la face éclairée par le soleil et la face à l'ombre.

Toutes ces circonstances expliquent que l'orientation des axes de visée des instruments d'observation ne peut pas être obtenue avec une précision meilleure que deux cents secondes d'arc environ, ce qui correspond à une incertitude de localisation de huit cents mètres au sol pour un satellite à l'altitude de huit cents kilomètres, alors qu'on sait localiser un satellite à quelques dizaines de mètres près. Cette différence prouve que l'amélioration de la localisation d'une vue au sol dépend maintenant avant tout de la qualité de l'orientation de l'instrument ou de son axe de visée.

L'invention a précisément trait à l'élimination de ce défaut d'imprécision d'orientation au moyen d'un système qui comprend sous sa forme la plus générale une source d'un premier motif lumineux solidaire de l'instrument, situé au voisinage du plan focal de l'instrument et composé d'au moins deux points; un capteur de lumière fixé à une orientation connue sur l'engin spatial porteur de l'instrument et du système ; et un miroir de renvoi placé pour réfléchir la lumière de la source vers le capteur, ce miroir étant solidaire soit du capteur soit du miroir de changement de visée (si celui-ci existe).

La position de l'image du motif lumineux sur le capteur exprime l'orientation de l'instrument. Si le système ne comprend pas d'autre élément notoire, il faut que l'orientation du miroir de renvoi - à ne pas confondre avec le miroir de changement de visée - soit parfaitement connue, ce qui est possible par exemple s'il est monté avec soin sur un support solidaire du capteur.

Le capteur de lumière peut notamment consister en un capteur d'étoiles d'emploi assez fréquent dans les satellites. Il fournit alors lui-même la référence d'orientation en détectant en même temps que l'image du motif lumineux celle des étoiles de référence et en comparant les positions des deux images sur son écran. La référence d'orientation peut aussi être complétée par un ensemble gyroscopique, qui est alors rigidement lié au capteur de lumière.

Si l'orientation du miroir de renvoi n'est pas connue avec précision, de nouvelles incertitudes en découlent. C'est pourquoi on peut être amené à utiliser une seconde source solidaire du capteur de lumière et qui émet un second motif lumineux, dont la lumière est renvoyée par le miroir de renvoi au capteur, et la position de l'image de ce second motif s'ajoute à la référence d'orientation du capteur et à la position du motif émis de l'instrument pour donner l'orientation de celui-ci, avec une perfection qui n'est plus altérée que par les incertitudes de résolution de détection et de direction de projection des motifs lumineux, qu'il est facile de réduire à un bas niveau.

L'invention peut être complétée par certains perfectionnements dans ses réalisations préférées. Le miroir de renvoi peut tout d'abord être anglé et formé de deux facettes planes et séparées par une arête, dont l'une réfléchit la lumière de la première source et l'autre celle de la seconde, ce qui permet de placer le capteur à peu près librement par rapport à l'instrument. Ou bien, s'il existe un miroir de changement de visée et si le miroir de renvoi est fixe, celui-ci peut comprendre une facette allongée perpendiculairement à l'axe de rotation du miroir de changement de visée et réfléchissant le motif lumineux de la première source vers un des côtés de l'axe de rotation du miroir de changement de visée où se trouve le capteur de lumière. Avec une telle disposition, le capteur est situé à côté de la trajectoire de visée de l'instrument et ne l'intercepte donc pas, et le capteur de lumière est utile pour une grande course angulaire du miroir de changement de visée.

L'invention va maintenant être décrite en liaison à ces objets et caractéristiques, et à d'autres, à l'aide des figures suivantes annexées à titre illustratif et non limitatif :

-   la figure 1 représente certains éléments essentiels d'une première réalisation du système de l'invention,
-   la figure 1a illustre schématiquement l'écran du capteur de lumière,
-   la figure 1b représente une modification de détail de la première réalisation,

- la figure 2 représente l'installation du capteur de lumière,
- la figure 2a illustre la formation des images sur l'écran du capteur de lumière,
- la figure 3 représente un miroir de renvoi,
- les figures 4a et 4b achèvent de représenter une autre réalisation complète de l'invention, et illustrent en particulier des miroirs de renvoi selon la figure 3,
- la figure 5 représente une autre constitution de l'invention, avec un miroir de renvoi différent,
- et les figures 6 et 7 illustrent un écran mobile utilisé en connexion à l'invention.

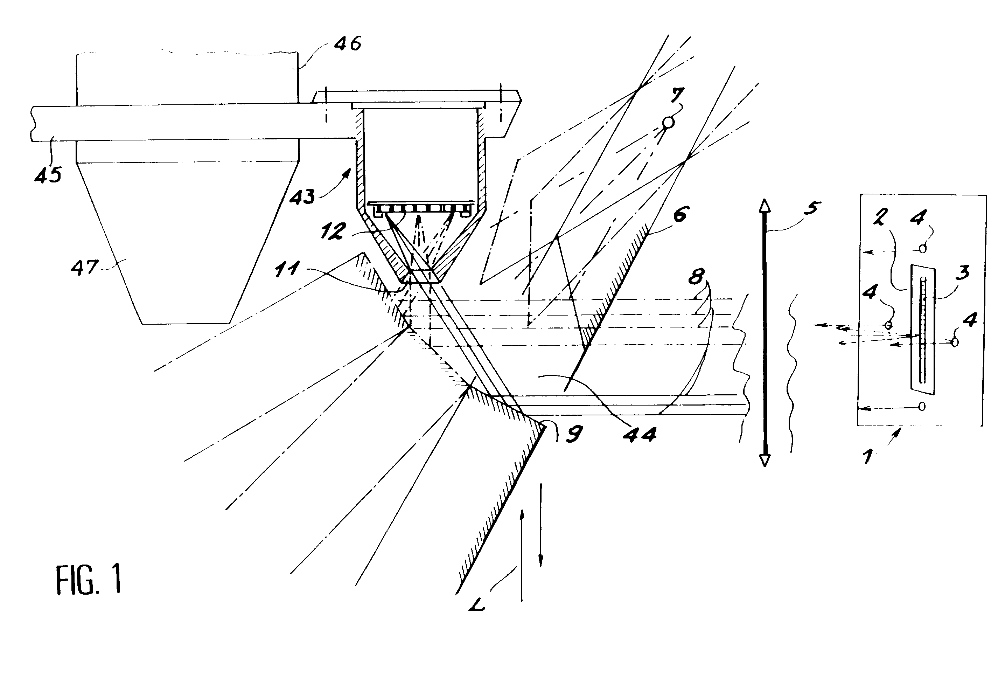

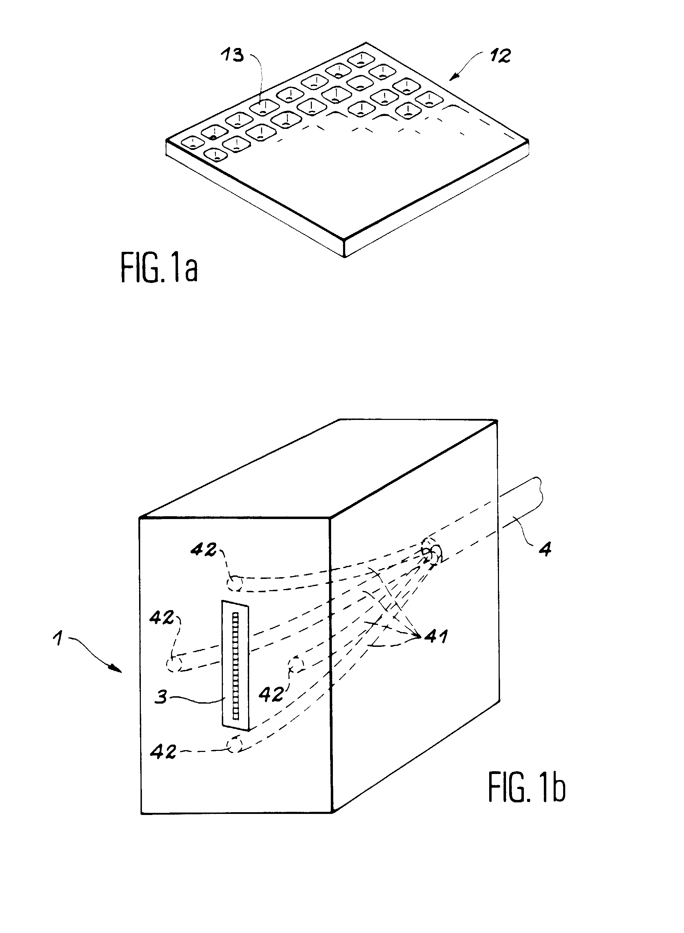

Dans les réalisations qui vont être décrites, les éléments de l'invention sont supposés montés sur un satellite artificiel. On examine d'abord les figures 1 et 1a. L'instrument d'observation 1, immobile sur le satellite, est partiellement représenté et possède en particulier une surface apparente 2 qui coïncide avec son plan focal et sur laquelle affleurent une barrette de détecteurs 3 d'observation et quatre diodes 4 luminescentes (comme on le verra ensuite, deux sources lumineuses pourraient suffire), qui émettent chacune un rayon d'une lumière de laser que des capteurs de lumière peuvent reconnaître. Deux des quatre diodes 4 sont placées aux bouts de la barrette de détecteurs 3, et les deux autres sur les côtés de celle-ci à mi-distance des premières. On peut avantageusement n'utiliser (selon la figure 1b) qu'une diode-laser 4 émettrice devant un faisceau divergent de fibres optiques 41, qui captent chacune une part de sa lumière et aboutissent aux mêmes points d'émission, à des extrémités 42, si bien que l'effet est le même.

Un système optique 5 est placé devant l'instrument d'observation 1. Il est symbolisé sous forme d'une lentille de focalisation mais peut être de tout genre connu, selon la nécessité et les propriétés de l'instrument 1. Un de ses effets est de défocaliser les rayons issus des diodes 4 pour étaler leur lumière selon des rayons 8 occupant un front de surface étendue.

Un miroir de changement de visée 6 est placé devant le système optique 5. Il tourne autour d'un axe de rotation 7 et sa course totale peut être, par exemple, de 30°. Les rayons originaires du point d'observation empruntant un axe de visée L parviennent à l'instrument 1 après avoir été réfléchis par le miroir de changement de visée 6. Les rayons 8 ne sont pas obligatoirement soumis à la réflexion sur le miroir de changement de visée 6, car ils passent par un trou 44 établi à travers lui, ou à côté de lui. Ils ne sont réfléchis que par un second miroir, appelé miroir de renvoi 9, qui est solidaire du miroir de changement de visée 6 et est ménagé sur une face du trou 44. Ils aboutissent à un capteur de lumière appelé capteur d'alignement 43 et précédé d'un système optique 11 apte à faire converger les rayons 8 sur une surface sensible 12 du capteur d'alignement 10, formée d'un rectangle, ici d'un carré, de détecteurs 13 (figure 1a). Un ordinateur (non représenté) intégré au capteur d'alignement 43 décompose l'image globalement enregistrée par les détecteurs 13 pour déduire l'orientation globale du satellite, auquel le capteur d'alignement 43 est supposé fixé à une orientation parfaitement connue. En effet, il est fixé à une platine 45 liée au satellite, à laquelle sont également fixés un capteur d'étoiles (capteur stellaire) 46 et un gyroscope 47 qui fournissent une référence d'orientation dans un repère fixe. Cette analyse d'image ne pose pas de problème particulier, car on peut toujours choisir des longueurs d'onde différentes pour les lumières des diodes 4 (0,95 micron par exemple) et celles qui correspondent aux longeurs d'ondes détectées dans l'instrument 1 (de 0,4 à 0,9 micron et 1 à 2 microns environ) si on ne dispose pas d'autres informations telles que la position ou l'étendue des images respectives.

Des informations suffisantes sont toujours produites si chacune des images comprend deux points, car un seul point ne permet pas de déceler toutes les rotations des éléments qui sont responsables de sa position sur la surface sensible 12. Les motifs lumineux composant les images seront donc formés de deux points au minimum en principe, et en pratique on préférera souvent en disposer de plus : c'est pourquoi la solution exposée utilise quatre diodes 4.

La défocalisation de la lumière des diodes 4 permet au miroir du renvoi 9 de rester inclus dans le front des rayons 8 pour toutes les rotations du miroir de changement de visée 6.

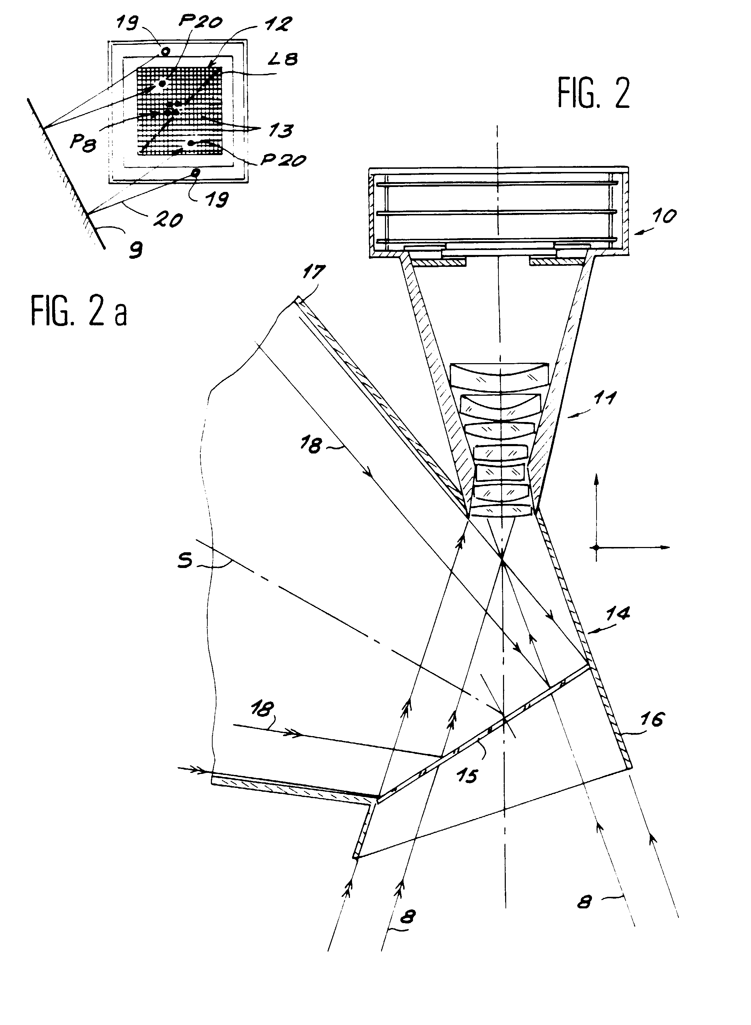

Les figures 2 et 2a donnent des informations relatives à la réalisation d'un capteur d'alignement 10 perfectionné, apte à servir simultanément de capteur d'étoiles, mais dont certaines peuvent aussi s'appliquer au capteur d'alignement 43 précédent. Un écran 14 est disposé devant l'optique 11 du capteur d'alignement 10 pour occulter les lumières parasites. Un semi-miroir 15 est enchâssé dans l'écran 14, qui est composé de deux cornets, dont l'un 16, portant le semi-miroir 15, est en prolongement de l'axe optique du capteur d'alignement 10, et l'autre 17 est branché au premier et situé devant le semi-miroir 15. Le semi-miroir 15 est utilisé pour que le capteur d'alignement 10 recueille la lumière formant les images de deux directions différentes. Plus précisément, il est transparent à la longueur d'onde des rayons 8 des diodes 4, qui le traversent donc en parcourant le cornet 16, mais il réfléchit les longueurs d'onde des étoiles détectées, dont les rayons 18 empruntent donc l'autre cornet 17 pour arriver au capteur d'alignement 10. Cet autre cornet peut être équipé d'un filtre des longueurs d'onde des diodes 4, pour faire immédiatement la distinction des images évoquée plus haut. Le semi-miroir 15 joue donc le rôle d'un filtre pour chacune des directions de mesure et permet de distinguer sans possibilité d'erreur, par leurs couleurs, les images des étoiles et des diodes 4 sur la surface sensible 12.

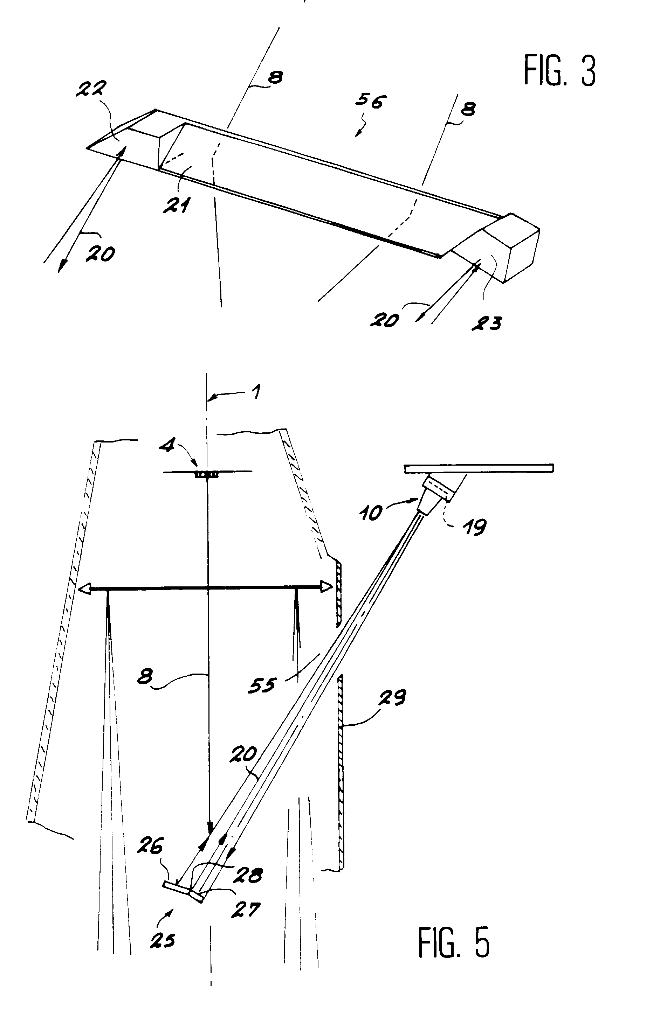

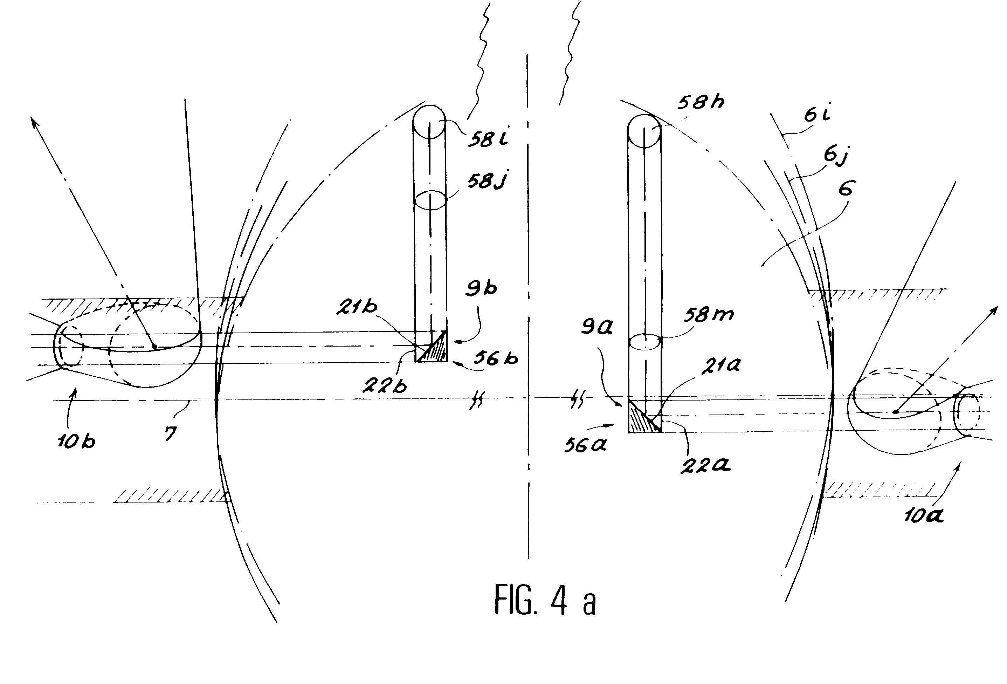

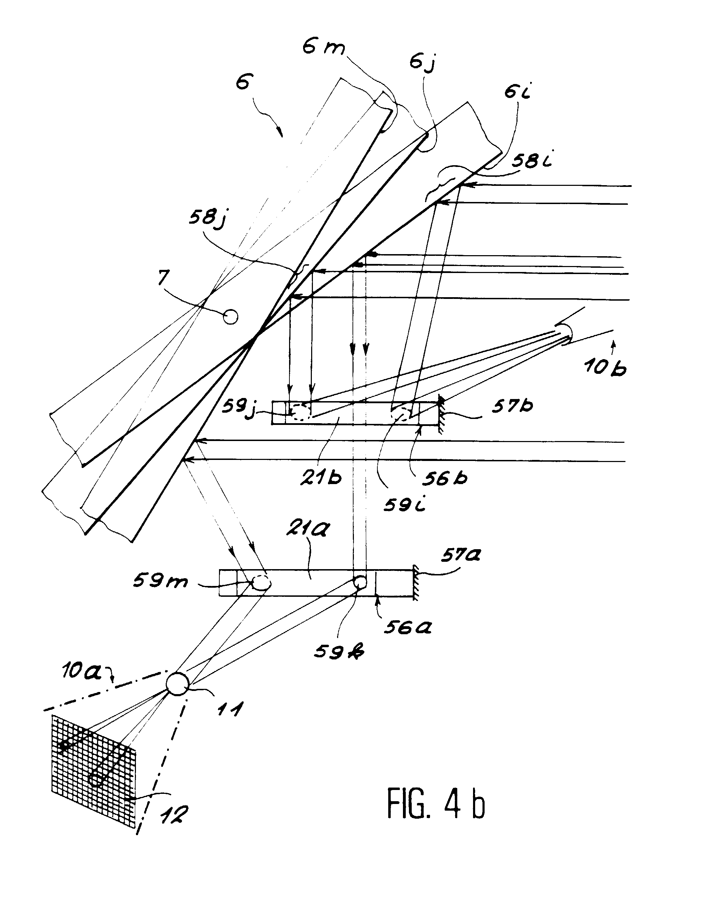

Une réalisation très avantageuse de l'invention va maintenant être décrite en liaison avec les figures 3, 4a et 4b. Elle illustre la mise en oeuvre concrète de certains des raisonnements qui précèdent. La description de la figure 1 reste valable en ce qui concerne l'instrument d'observation 1, le miroir de changement de visée 6 et les pièces connexes. Mais le système tel qu'il a été décrit jusqu'à présent n'est pas forcément suffisant car les rotations du miroir de renvoi 9 autour d'un axe perpendiculaire à son plan de réflexion ne sont pas détectées par le capteur d'alignement 10. On pourvoit le capteur d'alignement 10 de deux diodes 19 luminescentes supplémentaires (figure 2a), aux lisières du carré de détecteurs 13 et dont les rayons 20 sont dirigés vers le miroir de renvoi 9 puis réfléchis par lui et reviennent presque à leur point de départ, sur le carré de détecteurs 13. L'image de ce motif lumineux fournit par sa position sur le carré de détecteurs 13 l'orientation du miroir de renvoi 9. Elle est formée de deux points P20 qu'il est facile de distinguer du motif lumineux P8 produit par les rayons 8 originaires des diodes 4 situées sur l'instrument 1 et qui est formé de quatre points, même si les lumières sont de la même longueur d'onde, car ils sont situés sur des zones différentes de la surface sensible 12 : le motif lumineux P8 se déplace sur une ligne L8 selon les rotations du miroir de changement de visée 6, ligne qui peut être une diagonale du carré de détecteurs 13, et les points P20 sont situés à l'écart d'elle.

Le miroir de renvoi 56 de cette réalisation est complexe et formé de trois facettes différentes dont l'une, notée 21, est une lame oblique, à 45° et destinée à réfléchir les rayons 8 à angle droit. Les deux autres facettes 22 et 23 sont situées approximativement perpendiculairement à l'axe de rotation 7 (à un angle qui peut cependant varier de 60° à 120° environ en pratique), aux extrémités de la précédente 21 et servent à renvoyer les rayons 20 des diodes 19 vers les capteurs d'étoiles et d'alignement 10a ou 10b, qui sont au nombre de deux dans cette réalisation, pour des raisons qui seront expliquées.

Quand le miroir de changement de visée 6 tourne, les traces de réflexion des rayons 8 interceptés par l'optique des capteurs 10a ou 10b se déplacent sur toute la longueur de la facette 21, qui doit avoir l'extension conséquente. Les traces lumineuses qu'ils forment sur le carré de détecteurs 13 se déplacent également et le problème apparaît alors que les surfaces sensibles 12 couramment disponibles sont plutôt petites par rapport aux débattements usuels des miroirs de changement de visée 6. Ce problème est moins aigu si on s'arrange pour disposer le carré de détecteurs 13 de telle sorte que les traces lumineuses en parcourent sensiblement une diagonale d'un bout à l'autre, c'est-à-dire la ligne L8 de la figure 2a.

Un autre moyen pour rendre des débattements importants du miroir de changement de visée 6 compatibles avec l'invention consiste à dédoubler le système de repérage : cette solution est effectivement illustrée ici et pleinement visible aux figures 4a et 4b, où on voit deux miroirs de renvoi 56a et 56b différents qui réfléchissent les rayons 8 dans des directions latérales et opposées, parallèles à l'axe de rotation 7, vers deux capteurs d'alignement 10a et 10b situés sensiblement l'un en face de l'autre.

Dans cette réalisation, les miroirs de renvoi 56a et 56b sont indépendants du miroir de changement de visée 6 et liés au corps du satellite par des faces d'appui 57a et 57b ; ils sont parallèles et décalés légèrement devant le miroir de changement de visée 6, en direction transversale pour que les rayons 20 qu'ils renvoient aux capteurs d'alignement 10a et 10b ne soient pas interceptés par l'autre miroir de renvoi 56, et en direction longitudinale pour couvrir toute la course angulaire du miroir de changement de visée 6. Plus précisément, dans une position angulaire extrême de celui-ci, notée 6i, une partie des rayons 8, occupant un faisceau 8i, se réfléchit sur le miroir de changement de visée 6 en formant une tache lumineuse 58i et sur le miroir de renvoi 56b en formant une tache lumineuse 59i, près de la face d'appui 57b ; les rayons 8 correspondants sont renvoyés vers le capteur d'alignement 10b pour former l'image des diodes 4. Quand le miroir de changement de visée 6 tourne, les taches lumineuses 58 et 59, produites par les réflexions de la partie utile du front de rayons 8, se déplacent sur lui et sur la facette allongée 21b, et on finit par obtenir une situation où elles occupent les positions 58j et 59j (cette dernière vers l'extrémité de la facette allongée 21b opposée à la face d'appui 57b), la position du miroir de changement de visée 6 étant notée 6j et se situant au milieu de la course angulaire. Les rayons 8 concernés ne sont évidemment plus les mêmes que précédemment, mais ils sont tout aussi aptes à former l'image des diodes 4 sur la surface sensible 12 du capteur d'alignement 10b. De plus, d'autres rayons 8 forment simultanément des taches 58k et 59k sur le miroir de changement de visée 6 et une extrémité de la facette allongée 21a de l'autre miroir de renvoi 55a, qui commence à être utile et à former une image des diodes 4 sur le capteur d'alignement correspondant 10a.

Pour bien saisir comment le système optique fonctionne, il faut comprendre que des rayons 8 sont à tout moment réfléchis sur toute la facette allongée 21a ou 21b, mais que ceux qui sont hors de la tache lumineuse 59 sont renvoyés à côté du capteur d'alignement 10 et sont donc perdus, selon l'obliquité qui leur est donnée par la position angulaire du miroir de changement de visée 6 et qui apparaît sous forme d'une composante variable, vers la gauche selon la représentation de la figure 4b (verticalement au-delà de la tache 58 et horizontalement au-delà de la tache 59).

Quand la rotation du miroir de changement de visée 6 est poursuivie vers l'autre extrémité de sa course, à la position notée 6m, les taches lumineuses de déplacent vers les positions 58m et 59m, cette dernière à l'autre extrémité de la facette allongée 21a, et l'autre miroir de renvoi 55b n'est plus atteint par les rayons 8.

Le fait que la lumière des diodes 4 utilise le chemin inverse de la lumière de l'instrument d'observation 1 (du plan focal de l'instrument, où sont les diodes 4, au miroir de changement de visée 6) est une garantie de performance de l'invention.

Dans un exemple concret, le miroir de changement de visée 6 a une course angulaire totale de 30°, ce qui permet donc de déplacer l'axe de visée L de 60°, angle proche du maximum parmi les réalisations connues de satellites. On choisit comme surface sensible 12 un carré de détecteurs 13 de 1024 points d'image de côté pour un angle de vision de 26°, ce qui signifie que l'angle de vision est de $\sqrt{2}.26°$, soit environ 37° sur une diagonale (la ligne L8). La facette 21 est inclinée à 45° sur l'axe de rotation 7, ce qui n'est toutefois pas indispensable ni même nécessairement le meilleur. La surface sensible 22 détecte des étoiles entre les ordres de grandeur - 2,5 et + 4,5 environ, ce qui permet d'en repérer toujours au moins une à la fois. De plus, les axes de visée des étoiles (S sur la figure 2, correspondant à l'axe du cornet 17) des capteurs d'alignement 10 font un angle de 60° environ entre eux (qui pourrait avantageusement être proche de 90° et qui devrait être au moins de 45° environ) afin de pouvoir déduire avec une précision optimale l'orientation du satellite à l'aide des deux capteurs d'alignement 10 ensemble, ce qui est possible puisque chacun d'eux observe toujours une étoile.

Si le carré de détecteurs 13 a un côté de 19,5 mm, ou si les points d'image ont 1,9 micron de côté, les points lumineux P20 et ceux du motif P8 apparaissent sous forme de taches s'étendant sur deux, trois ou quatre points d'image à cause de la défocalisation, de l'aberration et de la diffraction. Le système optique 11 n'est en effet pas conçu pour focaliser parfaitement les rayons 8, mais pour former de petites taches lumineuses séparées et dont chacune correspond à la lumière d'une des diodes 4. La méthode barycentrique d'estimation de la position des taches, en vigueur sur les capteurs stellaires, est alors utilisée pour chaque tache lumineuse (originaire des diodes 4, 19 et des étoiles détectées) pour calculer le centre de la tache, assimilé à la projection de la source lumineuse associée et supposée ponctuelle. Elle est répétée sur les centres des taches lumineuses des diodes 4 pour calculer l'orientation de l'instrument d'observation 1. Cette méthode, accomplie par l'ordinateur associé au capteur d'alignement 10 et conforme à l'art connu, conduit à une incertitude d'orientation inférieure à dix secondes d'arc pour l'orientation de l'axe de visée, dans neuf cas sur dix.

Cela correspond à une incertitude de localisation au sol de 40 m pour un satellite à 800 km d'altitude. Si l'incertitude de position du satellite est de 25 m, l'incertitude cumulée (quadratiquement) est d'environ 50 m, ce qui doit être comparé avec les 800 m trouvés dans les mêmes conditions sans recourir à l'invention.

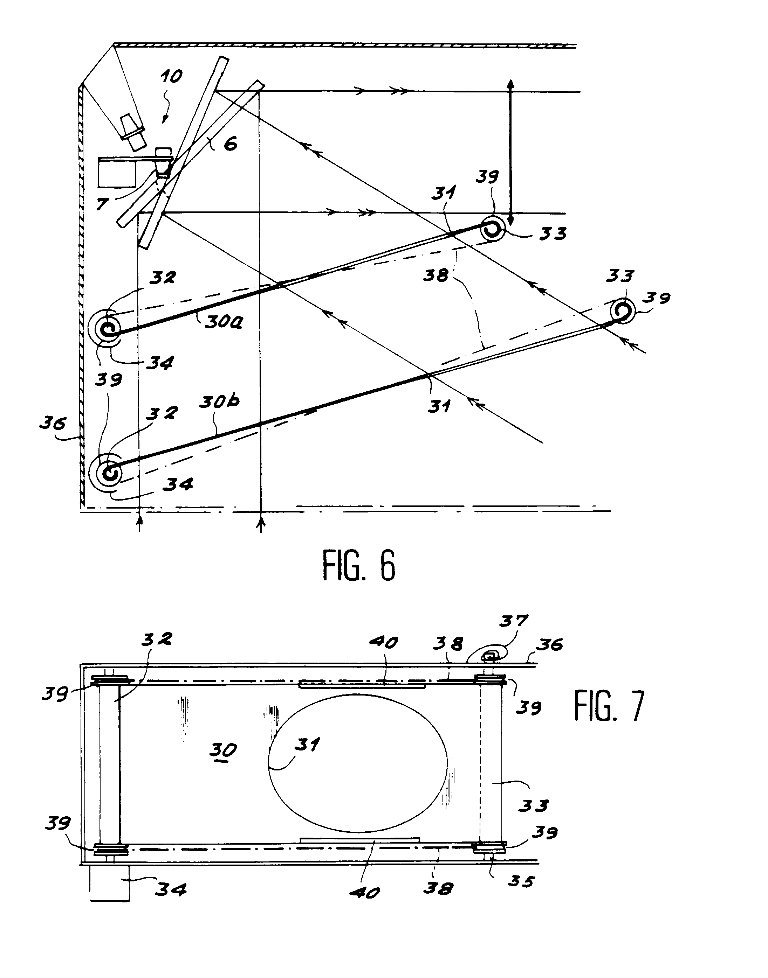

D'autres systèmes peuvent être conçus pour l'invention. C'est ainsi que le miroir de renvoi peut être plus petit si l'instrument est dépourvu de miroir de changement de visée. Il est référencé par 25 dans une réalisation de ce genre, dessinée à la figure 5, et se compose de deux facettes 26 et 27 limitées par une arête d'angle 28, et dont la première est destinée à réfléchir les rayons 8 des diodes 4 de l'instrument 1 vers le capteur d'alignement 10 (à faible champ de vue contrairement à la solution correspondante du miroir de changement de visée), et dont la seconde sert à réfléchir les rayons 20 des diodes 19 du capteur d'alignement 10. On a référencé par 29 un écran unique qui limite le champ de vue de l'instrument et le rayonnement parasite qu'il reçoit. Les rayons 8 réfléchis par le miroir 25 ainsi que les rayons 20 passent à travers un trou 55 qui y a été établi. Comme précédemment, l'orientation de l'instrument 1 est estimée en relevant les positions des taches des différentes diodes 4 et 19 sur la surface sensible du capteur d'alignement 10 et en les corrélant à l'orientation du capteur d'alignement 10, déduite d'une référence stellaire ou autre ou connue à l'avance. Ici encore, les diodes 19 et la facette 27 peuvent être omises si l'orientation du miroir de renvoi 25 est bien connue.

Ces localisations sont encore plus précises, car dans les mêmes conditions que dans la réalisation précédente et en particulier avec un même capteur d'alignement 10, l'incertitude de l'orientation de l'axe de visée n'est plus que de 3" d'arc. On déduit immédiatement que l'incertitude de localisation au sol est de 12 m (due à l'erreur d'alignement seule) pour un satellite à 800 km, et de 30 m (par une cumulation quadratique) si on considère en plus une incertitude de position du satellite de 25 m.

Un autre aspect de l'invention va maintenant être décrit. Il s'agit d'un système d'écrans mobiles pour un instrument d'observation optique à miroir de changement de visée. La figure 6 l'illustre dans une construction à deux de ces écrans 30a et 30b, qui consistent en une membrane dans laquelle un trou 31 est découpé. La forme des trous 31, ici elliptiques, et leur superficie sont adaptées à la largeur du champ de vision de l'instrument 1. Comme les écrans sont placés devant le miroir de changement de visée 6, il convient de les mouvoir en correspondance avec celui-ci pour maintenir les trous 31 sur le champ de visée. Par conséquent, la membrane de chaque écran 30 s'étend entre deux rouleaux 32 et 33, autour desquels ses extrémités sont enroulées et dont l'un au moins est entraîné par un moteur 34 et l'autre peut être entraîné de façon semblable par un autre moteur pour former un système redondant.

Les rouleaux 32 et 33 sont unis à des axes 35 tournant dans une charpente de support 36 (qui porte aussi le capteur d'alignement 10 et l'axe 7 du miroir de changement de visée 6), et un ressort 37 applique à un des axes 35 une sollicitation dans une direction de rotation qui permet de tendre toujours l'écran 30. Le ressort 37 peut être hélicoïdal ou spiral et a une raideur suffisamment faible pour exercer une force variant peu avec les rotations du rouleau 33 sur lequel il agit. Si un moteur 34 équipe chacun des rouleaux 32 et 33, on peut disposer un ressort 37 sur chacun des rouleaux 32 et 33 également, afin de commander un des moteurs 34 à la fois et d'assurer la tension par l'axe 35 qui n'est pas commandé.

Des câbles 38 sont tendus entre les rouleaux 32 et 33 parallèlement à l'écran 30 et sont de préférence répartis des deux côtés de celui-ci. Leurs extrémités sont en fait enroulées autour de poulies 39 dont les unes (une par câble 38) sont montées rigidement sur les axes 35 et les autres sont montées glissantes sur les axes 35 et sollicitées par des ressorts non représentés, semblables aux ressorts 37, pour tendre les câbles 38 en même temps que l'écran 30.

Les câbles 38 ont pour rôle d'assurer l'entraînement simultané des deux rouleaux 33 avec un seul moteur 34 et accessoirement la compensation dynamique des mouvements de l'écran 30.

Quand le moteur 34 tourne, l'écran 30 est déplacé dans une direction et les câbles 38 dans l'autre, et c'est pourquoi on les choisit avec des masses linéaires semblables afin que les quantités de mouvement de l'écran 30 et des câbles 38 s'équilibrent ; en toute rigueur, il convient de lester l'écran 30 devant le trou 31 par des renforts 40 pour égaliser la masse linéaire.

On remarque en outre que les directions d'extension de l'écran 30 et des câbles 38 sont croisées selon la vue de la figure 6 (prise dans la direction des axes 35). On annule alors en plus les moments cinétiques des rouleaux 32 et 33, et des poulies 39, qui tournent dans des sens opposés.

Les moments cinétiques du miroir de changement de visée 6, de son moteur non représenté et celui du moteur 34 peuvent aussi être annulés, en appliquant le principe décrit dans le brevet français 93 04953, où on montre qu'il suffit de disposer des trains d'engrenage dont le nombre, les rapports de denture et les masses des roues conviennent.

**Revendications**

1. Système de repérage d'orientation d'un instrument (1) d'observation embarqué à bord d'un engin spatial, ledit instrument comprenant un plan focal et un miroir de changement de visée (6) facultatif, ledit système étant caractérisé en ce qu'il comprend :

   • une source (4) d'un premier motif lumineux situé au voisinage dudit plan focal et composé d'au moins deux points ;
   • un capteur de lumière (10, 43) fixé à une orientation connue sur ledit engin spatial ; et
   • un miroir de renvoi (9, 25, 56) solidaire soit dudit miroir de changement de visée (6) facultatif soit dudit capteur (10, 43), et placé de façon à réfléchir la lumière de ladite source vers ledit capteur.

2. Système de repérage selon la revendication 1, caractérisé en ce qu'il comprend une source (19) d'un second motif lumineux solidaire du capteur (10), le miroir (25, 56) de renvoi étant placé pour réfléchir la lumière de la source (19) du second motif lumineux vers le capteur (10).

3. Système de repérage selon la revendication 1, caractérisé en ce que le premier motif lumineux au moins est constitué par des extrémités (42) d'un faisceau divergent de fibres optiques illuminées (41).

4. Système de repérage selon la revendication 1, caractérisé en ce que le capteur de lumière (43) est joint à un capteur d'étoiles (46) qui lui est solidaire.

5. Système de repérage selon la revendication 1, caractérisée en ce que le capteur de lumière (10) est aussi un capteur d'étoiles.

6. Système de repérage selon la revendication 5, caractérisé en ce que le capteur de lumière comprend un semi-miroir (15) réfléchissant une première catégorie de longueurs d'ondes et transparent à une autre catégorie, les étoiles détectés émettant une lumière d'une des catégories et les sources une lumière de l'autre des catégories.

7. Système de repérage selon la revendication 2, caractérisé en ce que le miroir est composé de deux facettes planes (26, 27) formant un angle et dont chacune reçoit un des motifs lumineux.

8. Système de repérage selon la revendication 1, caractérisé en ce que le miroir de renvoi (9) est solidaire du miroir de changement de visée (6).

9. Système de repérage selon la revendication 8, caractérisé en ce que le miroir de renvoi est établi sur une face d'un trou (55) du miroir de changement de visée.

10. Système de repérage selon la revendication 2, caractérisé en ce que le miroir de renvoi (56) est fixe et comprend au moins une facette allongée (21) perpendiculairement à un axe de rotation (7) du miroir de changement de visée et réfléchissant la source du premier motif lumineux vers un des côtés de l'axe de rotation (7) du miroir de changement de visée (6), et une facette approximativement perpendiculaire (22, 23) audit axe de rotation et qui réfléchit la seconde source.

11. Système de repérage selon la revendication 1, caractérisé en ce qu'il comprend un second miroir (56) de renvoi, les deux miroirs de renvoi étant fixes et comprenant chacun une facette (21) allongée perpendiculairement à un axe de rotation (7) du miroir de changement de visée et réfléchissant chacun la source du premier motif lumineux vers un des côtés respectifs de l'axe de rotation, et un second capteur de lumière (10) fixé à une orientation connue sur l'engin sptial, vers lequel le second miroir de renvoi réfléchit la source du premier motif lumineux, les miroirs de renvoi et les capteurs de lumière étant placés pour que les capteurs de lumière reçoivent la lumière de la source du premier motif lumineux pour des portions complémentaires et se chevauchant de la course angulaire du miroir du changement de visée (6).

12. Système de repérage selon la revendication 11, caractérisé en ce que les capteurs de lumière (10) sont des capteurs d'étoiles ayant des axes stellaires d'observation faisant un angle d'au moins 45°.

13. Système de repérage selon l'une quelconque des revendications 1 à 14, caractérisé en ce que le capteur de lumière a une surface sensible (12) en forme de rectangle (13) dont la lumière de la source (4) du premier motif lumineux parcourt une diagonale (L8) selon les rotations du miroir de changement de visée.

14. Système de repérage selon les revendications 2 et 13, caractérisé en ce que le miroir de renvoi est orienté pour que la lumière de la seconde source soit réfléchie sur la surface sensible à l'écart de la diagonale de la première source.

15. Système de repérage selon la revendication i, caractérisé en ce que l'instrument d'observation (1) à miroir de changement de visée est complété par un écran (30) ajouré (31) mobile devant le miroir de changement de visée (6).

16. Système de repérage selon la revendication 15, caractérisé en ce que l'écran ajouré mobile est tendu sur deux rouleaux ainsi que des câbles (38) de même masse linéaire que l'écran, qui sont tendus sur des côtés opposés des rouleaux.

17. Système de repérage selon la revendication 16, caractérisé en ce que les câbles et l'écran sont tendus croisés sur les rouleaux.

18. Système de repérage selon la revendication 16, caractérisé en ce que les câbles sont tendus sur les rouleaux par l'intermédiaire de poulies (39) tournant autour des rouleaux et liées aux rouleaux par des ressorts.

**Claims**

1. Angular position finding system for an observation instrument (1) carried on a spacecraft, said instrument having a focal plane and an optional sighting change mirror (6), said system being characterized in that it comprises:

   - a source (4) of a first light pattern located in the vicinity of said focal plane and constituted by at least two points,
   - a light sensor (10, 43) fixed with a known orientation on said spacecraft and
   - a reflecting mirror (9, 25, 56) integral either with the optional sighting change mirror (6) or with said sensor (10, 43) and positioned so as to reflect the light of said source towards said sensor.

2. Angular position finding system according to claim 1, characterized in that it comprises a source (19) of a second light pattern integral with the sensor (6), the reflecting mirror (25, 56) being positioned so as to reflect the light of the source (19) of the second light pattern towards the sensor (10).

3. Angular position finding system according to claim 1, characterized in that at least the first light pattern is constituted by the ends (42) of a divergent bundle of illuminated optical fibres (41).

4. Angular position finding system according to claim 1, characterized in that the light sensor (43) is joined to a star sensor (46) integral therewith.

5. Angular position finding system according to claim 1, characterized in that the light sensor (10) is also a star sensor.

6. Angular position finding system according to claim 5, characterized in that the light sensor comprises a half-mirror (15) reflecting a first category of wavelengths and transparent to another category, the detected stars emitting a light of one of the categories and the sources a light of the other of the categories.

7. Angular position finding system according to claim 2, characterized in that the mirror is formed from two planar facets (26, 27) forming an angle and whereof each receives one of the light patterns.

8. Angular position finding system according to claim 1, characterized in that the reflecting mirror (9) is integral with the sighting change mirror (6).

9. Angular position finding system according to claim 8, characterized in that the reflecting mirror is located on one face of a hole (55) of the sighting change mirror.

10. Angular position finding system according to claim 2, characterized in that the reflecting mirror (56) is fixed and comprises at least one elongated facet (21) perpendicular to the rotation axis (7) of the sighting change mirror and reflecting the source of the first light pattern towards one of the sides of the rotation axis (7) of the sighting change mirror (6), and a facet (22, 23) approximately perpendicular to said rotation axis and which reflects the second source.

11. Angular position finding system according to claim 1, characterized in that it comprises a second reflecting mirror (56), the two reflecting mirrors being fixed and having in each case a facet (21) elongated perpendicular to a rotation axis (7) of the sighting change mirror and each reflecting the source of the first light pattern towards one of the respective sides of the rotation axis, and a second light sensor (10) fixed with a known orientation on the spacecraft, towards which the second reflecting mirror reflects the source of the first light pattern, the reflecting mirrors and light sensors being positioned so that the light sensors receive the light from the source of the first light pattern for complimentary portions and overlap by the angular movement of the sighting change mirror (6).

12. Angular position finding system according to claim 11, characterized in that the light sensors (10) are star sensors having stellar observation axes forming an angle of at least 45°.

13. Angular position finding system according to any one of the claims 1 to 14, characterized in that the light sensor has a substantially rectangular (13) sensitive surface (12), the light from the source (4) of the first light pattern passing through a diagonal (L8) in accordance with the rotations of the sighting change mirror.

14. Angular position finding system according to claims 2 and 13, characterized in that the reflecting mirror is oriented so that the light of the second source is reflected on the sensitive surface away from the diagonal of the first source.

15. Angular position finding system according to claim 1, characterized in that the observation instrument (1) with sighting change mirror is completed by a mobile, perforated (31) screen (30) in front of the sighting change mirror (6).

16. Angular position finding system according to claim 15, characterized in that the mobile, perforated screen is tensioned on two rollers, as well as cables (38) having the same linear mass as the screen and which are tensioned on opposite sides of the rollers.

17. Angular position finding system according to claim 16, characterized in that the cables and screen are cross-tensioned on the rollers.

18. Angular position finding system according to claim 16, characterized in that the cables are tensioned on the rollers by means of pulleys (39) rotating about said rollers and linked to the rollers by springs.

**Patentansprüche**

1. orientierungskorrektursystem für ein an Bord eines Raumfahrzeugs befindliches Beobachtungsgerät (1), wobei besagtes Gerät eine Fokalebene und einen Spiegel zum wahlweisen Verstellen der Blickrichtung (6) umfaßt und das genannte System **dadurch gekennzeichnet** ist, daß es umfaßt:

   - eine Quelle (4) eines ersten, in der Nähe der genannten Fokalebene befindlichen und durch wenigstens zwei Punkte gebildeten Lichtmusters;
   - einen mit einer bekannten Ausrichtung an dem genannten Raumfahrzeug befestigten Lichtsensor (10, 43); und
   - einen Rückstrahlspiegel (9, 25, 56), entweder mit dem genannten Spiegel zum wahlweisen Verstellen der Blickrichtung (6) oder mit dem genannten Sensor (10, 43) verbunden und so angeordnet, daß er das Licht der genannten Quelle auf den genannten Sensor reflektiert.

2. System nach Anspruch 1, dadurch gekennzeichnet, daß es eine Quelle (19) eines zweiten Lichtmusters umfaßt, verbunden mit dem Sensor (10), wobei der Rückstrahlspiegel (25, 56) so angeordnet ist, daß er das Licht der Quelle (19) des zweiten Lichtmusters auf den Sensor (10) reflektiert.

3. System nach Anspruch 1, dadurch gekennzeichnet, daß wenigstens das erste Lichtmuster durch Enden (42) eines divergierenden Bündels leuchtender optischer Fasern (41) gebildet wird.

4. System nach Anspruch 1, dadurch gekennzeichnet, daß der Lichtsensor (43) mit einem Sternensensor (46) zusammengefügt ist, der fest bzw. starr mit ihm verbunden ist.

5. System nach Anspruch 1, dadurch gekennzeichnet, daß der Lichtsensor (10) auch ein Sternensensor ist.

6. System nach Anspruch 5, dadurch gekennzeichnet, daß der Lichtsensor einen semireflektierenden Spiegel (15) umfaßt, der eine erste Kategorie von Wellenlängen reflektiert und transparent ist für eine andere Kategorie, wobei die detektierten Sterne ein Licht von einer der Kategorien abstrahlen und die Quellen ein Licht von der anderen Kategorie.

7. System nach Anspruch 2, dadurch gekennzeichnet, daß der Spiegel durch zwei ebene Facetten (26, 27) gebildet wird, die einen Winkel bilden und von denen jede eines der Lichtmuster empfängt.

8. System nach Anspruch 1, dadurch gekennzeichnet, daß der Rückstrahlspiegel (9) mit dem Blickrichtungs-Verstellspiegel (6) fest bzw. starr verbunden ist.

9. System nach Anspruch 8, dadurch gekennzeichnet, daß der Rückstrahlspiegel auf einer Fläche eines Lochs (55) des Blickrichtungs-Verstellspiegels hergestellt wird.

10. System nach Anspruch 2, dadurch gekennzeichnet, daß der Rückstrahlspiegel (56) fest ist und wenigstens eine längliche Facette (21) umfaßt, die senkrecht zu einer Drehachse (7) des Blickrichtungs-Verstellspiegels ist und die Quelle des ersten Lichtmusters in Richtung einer der Seiten der Drehachse (7) des Blickrichtungs-Verstellspiegels (6) reflektiert, und eine Facette (22, 23) die annähernd senkrecht zu der genannten Drehachse ist und die die zweite Quelle reflektiert.

11. System nach Anspruch 1, dadurch gekennzeichnet, daß es einen zweiten Rückstrahlspiegel (56) umfaßt, wobei die beiden Rückstrahlspiegel fest sind und jeder eine längliche Facette (21) umfaßt, senkrecht zu einer Drehachse (7) des Blickrichtungs-Verstellspiegels, von denen jede die Quelle des ersten Lichtmusters in Richtung einer der jeweiligen Seiten der Drehachse reflektiert, und einen zweiten Lichtsensor (10), mit einer bekannten Ausrichtung an dem Raumfahrzeug befestigt, auf den der zweite Rückstrahlspiegel die Quelle des ersten Lichtmusters reflektiert, wobei die Rückstrahlspiegel und die Lichtsensoren so angeordnet sind, daß die Lichtsensoren das Licht der Quelle des ersten Lichtmusters für komplementäre und sich überlappende Teile des Winkelhubs bzw. -bereichs des Blickrichtungs-Verstellspiegels (6) empfangen.

12. System nach Anspruch 11, dadurch gekennzeichnet, daß die Lichtsensoren (10) Sternensensoren sind, die stellare Beobachtungsachsen haben, die einen Winkel von wenigstens 45° bilden.

13. System nach einem der Ansprüche 1 bis 14, dadurch gekennzeichnet, daß der Lichtsensor eine empfindliche Fläche (12) mit der Form eines Rechtecks (13) umfaßt, auf der das Licht der Quelle (4) des ersten Lichtmusters eine Diagonale (L8) durchläuft, entsprechend den Drehungen des Blickrichtungs-Verstellspiegels.

14. System nach nach den Ansprüchen 2 und 13, dadurch gekennzeichnet, daß der Rückstrahlspiegel so ausgerichtet ist, daß die zweite Quelle mit Abstand von der Diagonalen der ersten Quelle auf die empfindliche Fläche reflektiert wird.

15. System nach Anspruch 1, dadurch gekennzeichnet, daß das Beobachtungsgerät (1) mit Blickrichtungs-Verstellspiegel vervollständigt wird durch einen vor dem Blickrichtungs-Verstellspiegel beweglichen, durchbrochenen (13) Schirm (30).

16. System nach Anspruch 15, dadurch gekennzeichnet, daß der bewegliche durchbrochene Schirm auf zwei Rollen gespannt ist, ebenso wie Kabel (38) derselben linearen Masse wie der Schirm, die auf entgegengesetzte Seiten der Rollen gespannt sind.

17. System nach Anspruch 16, dadurch gekennzeichnet, daß die Kabel und der Schirm gekreuzt bzw. überkreuzt auf die Rollen gespannt sind.

18. System nach Anspruch 16, dadurch gekennzeichnet, daß die Kabel mittels Scheiben (39) auf die Rollen gespannt sind, die um die Rollen herum drehbar sind und mit den Rollen durch Federn verbunden sind.

FIG. 1

FIG.1a

FIG. 1b

FIG. 2

FIG. 2 a

FIG. 3

FIG. 5

FIG. 4 a

FIG. 4 b

FIG. 6

FIG. 7